# EUROPÄISCHE PATENTSCHRIFT

(11) **EP 3 600 700 B1**
(45) Veröffentlichungstag und Bekanntmachung des Hinweises auf die Patenterteilung: **11.06.2025**
(21) Anmeldenummer: 17712953.3
(22) Anmeldetag: 21.03.2017
(51) Int. Cl.: B06B 3/00, B23K 20/10, B29C 65/08

(54) **TORSIONALES ULTRASCHALLBEARBEITUNGSSYSTEM UND VERFAHREN ZUM ABSTIMMEN EINES TORSIONSSCHWINGERS**
TORSIONAL ULTRASONIC PROCESSING SYSTEM AND METHOD FOR TUNING A TORSIONAL OSCILLATOR
SYSTÈME D'USINAGE TORSIONNEL PAR ULTRASONS ET PROCÉDÉ DE RÉGLAGE D'UN OSCILLATEUR TORSIONNEL

(43) Veröffentlichungstag der Anmeldung: 05.02.2020
(73) Patentinhaber: Telsonic Holding AG, 9552 Bronschhofen (CH)
(72) Erfinder: SOLENTHALER, Peter, 9543 St. Margarethen (CH); BÜTTIKER, Albert, 9607 Mosnang (CH)
(74) Vertreter: Hepp Wenger Ryffel AG
(86) Internationale Anmeldenummer: PCT/EP2017/056637
(87) Internationale Veröffentlichungsnummer: WO 2018/171864

(56) Entgegenhaltungen:
- EP-A1- 0 761 371
- EP-A1- 1 930 148
- WO-A1-95/23668
- CN-U- 204 954 153
- JP-A- S57 178 826

## Beschreibung

Die Erfindung betrifft torsionale Ultraschallbearbeitungssysteme, insbesondere Ultraschallschweisssysteme, mit einem um eine Torsionsachse zu Torsionsschwingungen anregbaren Torsionsschwinger und einer damit schwingungsgekoppelten Bearbeitungsfläche, insbesondere Schweissfläche. Derartige Ultraschallschweisssysteme sind beispielsweise aus EP 1 930 148, DE 10 2009 027 021, WO 2011/138404 und WO 2012/069413 bekannt.

Die US 3,257,712 A offenbart die Abstützung eines Torsionsschwingers in einem Schwingungsknoten, also in einem Amplitudenminimum der Torsionsschwingungen.

JP S57 178826 zeigt einen Oszillator, der über ein Horn mit einem Halter verbunden ist. Ultraschallwellen werden durch den Oszillator erzeugt, so dass der Halter abwechselnd in verschiedene Richtungen in eine Drehbewegung versetzt wird, um um Stossflächen herum Reibungswärme zu erzeugen und deren Verschmelzen zu ermöglichen.

Obwohl sich die aus dem Stand der Technik bekannten torsionalen Ultraschallschweisssysteme bewährt haben, besteht in einigen Punkten ein Bedarf an weiteren Verbesserungen. Beispielsweise sollten bei jedem Ultraschallschweissverfahren die schwingenden Teile möglichst von den statischen Teilen schallentkoppelt werden, um die Energieverluste und Wärmebildung möglichst gering zu halten. Problematisch ist dabei unter anderem, dass häufig eine störende, breitbandige zweite Torsionalresonanz im Leerlauf oder bei voller Blockierung der Schweissfläche in einem gewünschten Arbeitsbereich liegt, der bei einer mittleren Frequenz von 20 kHz beispielsweise eine Breite von ± 1 kHz haben kann. Weiterhin ist es oft anspruchsvoll, den Torsionsschwinger auf die richtige Resonanzfrequenz abzustimmen.

Es ist daher eine Aufgabe der vorliegenden Erfindung, die bekannten Ultraschallbearbeitungssysteme, insbesondere Ultraschallschweisssysteme, in dieser Hinsicht weiterzuentwickeln. Insbesondere sollen also eine möglichst gute Schallentkopplung erreicht, die Abstimmung des Torsionsschwingers erleichtert, ein möglichst kleiner Bauraum eingenommen, die Masse reduziert und/oder Biegeschwingungen unterdrückt werden.

Diese und weitere Aufgaben werden durch ein erfindungsgemässes Ultraschallbearbeitungssystem gemäß Anspruch 1 gelöst. Das Ultraschallbearbeitungssystem kann beispielsweise ein Ultraschallverbindungssystem sein, mit dem zwei oder mehr Bauteile verbunden, insbesondere verschweisst und/oder verlötet werden können. Die Bearbeitungsfläche kann in diesen Ausführungsformen als Schweissfläche bzw. Lötfläche ausgebildet sein. Alternativ kann das Ultraschallbearbeitungssystem aber beispielsweise auch ein Ultraschallstanzsystem sein.

Das Ultraschallbearbeitungssystem, insbesondere Ultraschallschweisssystem kann weiterhin mindestens einen den Torsionsschwinger wenigstens teilweise umgreifenden und haltenden Befestigungsring enthalten.

Der Befestigungsring hält den Torsionsschwinger im Bereich eines Amplitudenmaximums der Torsionsschwingungen. Definitionsgemäss beträgt im "Bereich eines Amplitudenmaximums der Torsionsschwingungen" die Amplitude der Torsionsschwingungen mindestens 30 % des Amplitudenmaximums der Torsionsschwingungen.

Dies geschieht in Abkehr vom Stand der Technik, beispielsweise von dem in US 3,257,712 A offenbarten, in dem eine Lagerung im Bereich eines Amplitudenminimums vorgeschlagen wird. Diese Anordnung des Befestigungsringes hat den Vorteil, dass die ansonsten störende, breitbandige zweite Torsionalresonanz im Leerlauf oder bei voller Blockierung der Bearbeitungsfläche nicht mehr in einem gewünschten Arbeitsbereich liegt, der bei einer mittleren Frequenz von 20 kHz beispielsweise eine Breite von ± 1 kHz haben kann.

Zur Erzeugung von Torsionsschwingungen des Torsionsschwingers sind in an sich bekannter Weise mindestens zwei Schwingungserzeuger vorgesehen. Der Schwingungserzeuger enthält mindestens einen Ultraschallkonverter und mindestens ein Übertragungsstück, die miteinander einstückig ausgebildet sein können. Im Ultraschallkonverter, der beispielsweise einen Stapel piezoelektrischer Scheiben enthalten kann, werden elektrische Schwingungen in mechanische Ultraschallschwingungen konvertiert. Der Ultraschallkonverter ist über das Übertragungsstück mit dem Torsionsschwinger schwingungsgekoppelt, wobei das Übertragungsstück zur Ausführung longitudinaler Schwingungen ausgebildet und tangential an den Torsionsschwinger angekoppelt ist.

Vorteilhafterweise weist der Befestigungsring einen flanschförmigen Abschnitt und einen sich vom flanschförmigen Abschnitt in Richtung der Torsionsachse erstreckenden hülsenförmigen Abschnitt auf. Der flanschförmige Abschnitt kann in einem äusseren Bereich an einem statischen Teil des Ultraschallbearbeitungssystems befestigt sein, und zwar bevorzugt über weiter unten noch detailliert erläuterte erste Bedämpfungsmittel. Der hülsenförmige Abschnitt erstreckt sich bevorzugt vom inneren Bereich des flanschförmigen Abschnitts.

Des Weiteren kann der Befestigungsring über einen Haltering verfügen, der sich von dem vom flanschförmigen Abschnitt abgewandten axialen Ende des hülsenförmigen Abschnitts in radialer Richtung nach innen erstreckt. Ein radial inneres Ende des Halterings kann den Torsionsschwinger halten und beispielsweise auf diesen aufgeschrumpft sein. Durch diese Ausgestaltung ergibt sich insgesamt eine Schallentkopplung auf sehr kurzer Distanz, wodurch unter anderem der Bauraum verkleinert werden kann. Zweckmässigerweise kann der Torsionsschwinger in dem Bereich, in dem er vom Haltering gehalten wird, verjüngt sein. Dies ermöglicht eine saubere mechanische Bearbeitung und eine Eliminierung von Biegeschwingungen.

Mit besonderem Vorteil ist im hülsenförmigen Abschnitt des Befestigungsringes mindestens eine Entkopplungsöffnung gebildet. Die Entkopplungsöffnung durchdringt den hülsenförmigen Abschnitt in radialer Richtung. Beispielsweise kann die Entkopplungsöffnung als Langloch ausgebildet sein, dessen Längsachse sich in Richtung der Torsionsachse erstreckt. Bevorzugt enthält der hülsenförmige Abschnitt mehrere Entkopplungsöffnungen, insbesondere Langlöcher, die vorteilhafter Weise gleichmässig um den Umfang verteilt sind. Durch die zwischen solchen Entkopplungsöffnungen, insbesondere Langlöchern, gebildeten Stege können effektiv Torsionskräfte und torsionale Auslenkungen aufgenommen werden, was für eine verbesserte Schallentkopplung sorgt. Alternativ ist es auch denkbar und liegt im Rahmen der Erfindung, dass sich die Langlöcher bezüglich der Torsionsachse in Umfangsrichtung erstrecken.

Ein Befestigungsring ist besonders dann vorteilhaft, wenn die Bearbeitungsfläche an einer Stirnseite des Torsionsschwingers angeordnet ist, also im Wesentlichen senkrecht zur Torsionsachse verläuft. Denn bei dieser Anordnung verlaufen die Kraft- und Bewegungsrichtung parallel zur Torsionsachse. Diese Anordnung ist beispielsweise bei dem von der Anmelderin vertriebenen System SoniqTwist realisiert. Allerdings ist es auch denkbar, dass ein Befestigungsring gemäss dem ersten Aspekt verwendet wird, wenn die Bearbeitungsfläche an einer Umfangsseite des Torsionsschwingers angeordnet ist.

Der Befestigungsring kann bezüglich der Torsionsachse zwischen einem Ankopplungspunkt, an dem der Torsionsschwinger zu Schwingungen angeregt wird, und der Schweissfläche angeordnet sein. Alternativ kann der Befestigungsring bezüglich eines Ankopplungspunktes gegenüber von der Schweissfläche angeordnet sein. Die zweite Variante ermöglicht eine symmetrischere Anordnung und einen kürzeren Abstand der Schweissfläche vom Ankopplungspunkt.

Ein zweiter Aspekt betrifft auch ein Verfahren gemäß Anspruch 15 zum Abstimmen eines um eine Torsionsachse zu Torsionsschwingungen anregbaren Torsionsschwingers eines torsionalen Ultraschallbearbeitungssystems, insbesondere eines Ultraschallschweisssystems. In diesem Verfahren wird mindestens ein Abstimmring derart gewählt und mit dem Torsionsschwinger verbunden, dass er diesen wenigstens teilweise umgreift und der Torsionsschwinger mit dem damit verbundenen Abstimmring eine Arbeitsfrequenz in einem vorgegebenen Frequenzbereich aufweist.

Der Abstimmring erweitert die Möglichkeiten, die Geometrie des Torsionsschwingers zu ändern, ohne dass eine Arbeitsfrequenz des Torsionsschwingers verändert werden muss. So ist es beispielsweise möglich, die Länge des Torsionsschwingers zu verändern, insbesondere zu reduzieren. Dies kann nützlich sein, um störende Resonanzen, beispielsweise breitbandige zweite Torsionalresonanzen, zu unterdrücken. Ohne weitere Massnahmen würde sich durch diese Änderung der Geometrie aber auch die Arbeitsfrequenz ändern. Durch entsprechend Wahl des Abstimmrings kann diese Verschiebung der Arbeitsfrequenz zumindest teilweise oder sogar vollständig kompensiert werden.

Der Abstimmring ist vorzugsweise aufgrund seiner Masse derart auf den Torsionsschwinger abgestimmt, dass der Torsionsschwinger mit dem damit verbundenen Abstimmring eine Arbeitsfrequenz in dem vorgegebenen Frequenzbereich aufweist. Dies erlaubt eine besonders einfache Abstimmung. Beispielsweise kann die Masse des Abstimmrings durch Wahl seines Aussendurchmessers und/oder seiner axialen Höhe eingestellt sein.

Der Abstimmring kann beispielsweise auf den Torsionsschwinger aufgeschrumpft sein bzw. werden.

Mit besonderem Vorteil ist der Abstimmring im Bereich eines Amplitudenmaximums der Torsionsschwingungen mit dem Torsionsschwinger verbunden. Wie oben bereits angeführt wurde, beträgt im "Bereich eines Amplitudenmaximums der Torsionsschwingungen" die Amplitude der Torsionsschwingungen mindestens 30 % des Amplitudenmaximums der Torsionsschwingungen. Diese Anordnung ermöglicht eine besonders effektive Abstimmung. Denn der Einfluss des Abstimmrings umso grösser, je näher er sich an einem Amplitudenmaximum der Torsionsschwingungen befindet. Somit kann die Masse des Abstimmrings möglichst klein gehalten werden.

Zweckmässigerweise kann der Torsionsschwinger im Bereich des Abstimmrings verjüngt sein. Dies ermöglicht eine saubere mechanische Bearbeitung und eine Eliminierung von Biegeschwingungen.

Ein Abstimmring gemäss dem zweiten Aspekt ist besonders dann vorteilhaft, wenn die Bearbeitungsfläche an einer Umfangsseite des Torsionsschwingers angeordnet ist, also im Wesentlichen parallel zur Torsionsachse verläuft. Diese Anordnung ist beispielsweise bei dem von der Anmelderin vertriebenen System PowerWheel realisiert.

Das Ultraschallbearbeitungssystem kann erste Bedämpfungsmittel zum insbesondere passiven Bedämpfen des Torsionsschwingers enthalten. Insbesondere sind die ersten Bedämpfungsmittel zum insbesondere passiven Bedämpfen von Schwingungen des Torsionsschwingers im Bereich von 10 Hz bis 10 kHz ausgebildet. Auf diese Weise können in einigen Ausführungsformen Rissbildungen im Bereich der Anbindung zwischen dem Torsionsschwinger und einem Schwingungserzeuger, insbesondere einem Ultraschallkonverter eines Schwingungserzeugers, verhindert werden. Alternativ kann es sich aber auch um erste Bedämpfungsmittel zum aktiven Bedämpfen des Torsionsschwingers handeln, wie etwa Piezo-Aktoren in einem Frequenzbereich von 10 Hz bis 10 kHz.

Enthält das Ultraschallbearbeitungssystem einen Befestigungsring, so ist dieser zweckmässigerweise über die ersten Bedämpfungsmittel an einem statischen Teil des Ultraschallverbindungssystems gelagert. Hierdurch können besonders effektiv störende Resonanzschwingungen reduziert werden, insbesondere in einem Frequenzbereich von 10 Hz bis 10 kHz. Passive erste Bedämpfungsmittel können beispielsweise mindestens eine Lage aus einem elastischen, dämpfenden Material enthalten, beispielsweise aus Gummi.

Im Falle eines Ultraschallverbindungssystems, beispielsweise eines Ultraschallschweisssystems, sind vorteilhaft alternativ oder zusätzlich zweite Bedämpfungsmittel zum insbesondere passiven Bedämpfen eines Ambosses des Ultraschallverbindungssystems vorhanden. Bevorzugt ist der Amboss über die zweiten Bedämpfungsmittel an einer Ambosshalterung gelagert. Auch hierdurch können besonders effektiv störende Resonanzschwingungen reduziert werden. Passive zweite Bedämpfungsmittel können beispielsweise mindestens eine Lage aus einem elastischen, dämpfenden Material enthalten, beispielsweise aus Gummi. Alternativ können zweite Bedämpfungsmittel zum aktiven Bedämpfen des Ambosses vorhanden sein, wie etwa Piezo-Aktoren in einem Frequenzbereich von 10 Hz bis 10 kHz.

Das Ultraschallbearbeitungssystem gemäss der Erfindung enthält
- mindestens einen Torsionsschwinger,
- mindestens eine mit dem Torsionsschwinger schwingungsgekoppelte Bearbeitungsfläche,
- mindestens zwei Schwingungserzeuger mit jeweils mindestens einem Ultraschallkonverter und mindestens einem an einer Verbindungsstelle damit insbesondere einstückig verbundenen Übertragungsstück, das mittels mindestens eines der Ultraschallkonverter zu longitudinalen Schwingungen entlang einer Schwingungsachse anregbar und an einem Ankopplungspunkt tangential am Torsionsschwinger angekoppelt ist, um diesen zu Torsionsschwingungen um eine Torsionsachse anzuregen.

Im Ultraschallkonverter, der beispielsweise in an sich bekannter Weise einen Stapel piezoelektrischer Scheiben enthalten kann, werden elektrische Schwingungen in mechanische Ultraschallschwingungen konvertiert.

Gemäss der Erfindung sind mindestens zwei der Schwingungserzeuger über einen Zwischensteg miteinander verbunden. Auf diese Weise kann eine statische und/oder dynamische Verstärkung erreicht werden, was in einer erhöhten Stabilität resultiert.

Die Übertragungsabschnitte mindestens zweier über einen Zwischensteg miteinander verbundener Schwingungserzeuger weisen zueinander parallele Schwingungsachsen auf. Bei einer derartigen Anordnung der Schwingungsachsen ist der genannte Effekt des Zwischenstegs besonders ausgeprägt.

Vorzugsweise ist der Zwischensteg an seinen beiden Enden mit jeweils einer wie oben beschriebenen Verbindungsstelle des Schwingungserzeugers mit diesem verbunden. Hierdurch kann eine besonders effektive Verstärkung erreicht werden.

Mindestens eines der Übertragungsstücke weist entlang seiner Schwingungsachse von der Verbindungsstelle bis zum Ankopplungspunkt eine Länge auf, die zumindest näherungsweise gleich einer viertel Wellenlänge der longitudinalen Schwingungen bei bestimmungsgemässem Betrieb des Ultraschallbearbeitungssystems ist. Dabei wird eine Länge l als "zumindest näherungsweise gleich einer viertel Wellenlänge" λ/4 angesehen, wenn 0,9 λ/4 ≤ 1 ≤ 1,1 λ/4.

Im Gegensatz zu den bisher bekannten Ultraschallbearbeitungssystemen ist die genannte Dimension des Übertragungsstücks also kein ganzzahliges Vielfaches der halben Längenwelle, sondern nur zumindest näherungsweise gleich der viertel Wellenlänge. Durch diese kürzere Ausbildung können störende Biegeschwingungen weitgehend unterdrückt werden. Auf diese Weise können in einigen Ausführungsformen Rissbildungen im Bereich der Anbindung zwischen dem Torsionsschwinger und dem Schwingungserzeuger, insbesondere dessen Ultraschallkonverter, verhindert werden. Weiterhin können die Masse und die Baugrösse des Ultraschallbearbeitungssystems reduziert werden. Wie sich zudem überraschend herausgestellt hat, genügt eine derart kurze Ausbildung, um den Torsionsschwinger effizient zu Torsionsschwingungen anzuregen.

Auch der Ultraschallkonverter kann entlang der Schwingungsachse eine Länge aufweisen, die gleich einer viertel Wellenlänge λ/4 der longitudinalen Schwingungen bei bestimmungsgemässem Betrieb des Ultraschallbearbeitungssystems ist. Insgesamt hat dann der Schwingungserzeuger im Falle eines einzigen Ultraschallkonverters und eines einzigen Übertragungsstücks entlang der Schwingungsachsen eine Länge, die gleich einer halben Wellenlänge λ/2 der longitudinalen Schwingungen bei bestimmungsgemässem Betrieb des Ultraschallbearbeitungssystems ist.

Die Erfindung wird nachfolgend anhand von Ausführungsbeispielen und Zeichnungen näher erläutert. Dabei zeigen
- Figur 1:: eine perspektivische Ansicht eines ersten torsionalen Ultraschallbearbeitungssystems mit vier Ultraschallkonvertern und einem Befestigungsring;
- Figur 2a:: eine perspektivische Ansicht eines zweiten torsionalen Ultraschallbearbeitungssystems mit vier Ultraschallkonvertern und einem Abstimmring;
- Figur 2b:: eine teilweise geschnittene Seitenansicht des zweiten torsionalen Ultraschallbearbeitungssystems;
- Figur 2c:: eine Detailansicht des Ausschnitts A aus Figur 2b;
- Figur 3a:: eine perspektivische Ansicht eines Teils mit zwei Ultraschallkonvertern und einem Befestigungsring;
- Figur 3b:: eine weitere perspektivische Ansicht eines dritten Ultraschallbearbeitungssystems;
- Figur 3c:: eine seitliche Schnittansicht des dritten Ultraschallbearbeitungssystems;
- Figur 4:: eine perspektivische Ansicht eines vierten Ultraschallbearbeitungssystems mit zwei Ultraschallkonvertern und einem Abstimmring;
- Figur 5a:: eine perspektivische Ansicht eines fünften Ausführungsbeispiels gemäß der Erfindung mit zwei kurzen Schwingungserzeugern;
- Figur 5b:: eine Seitenansicht des fünften erfindungsgemässen Ausführungsbeispiels;
- Figur 5c:: eine Draufansicht des fünften erfindungsgemässen Ausführungsbeispiels;
- Figur 5d:: eine Frontalansicht des fünften erfindungsgemässen Ausführungsbeispiels;
- Figur 6:: eine seitliche Schnittansicht eines sechsten erfindungsgemässen Ausführungsbeispiels, welches eine Bedämpfung eines Ambosses zeigt.

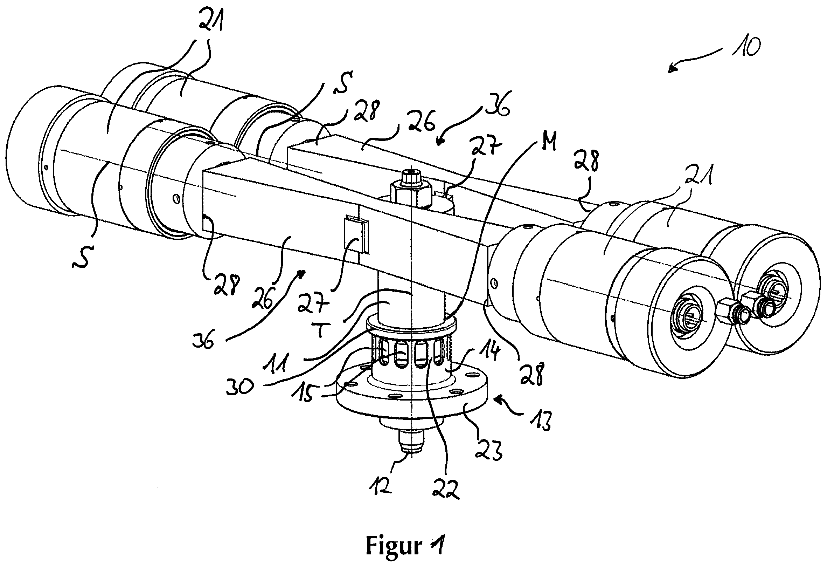

Das in Figur 1 teilweise dargestellte torsionale Ultraschallschweisssystem 10 enthält einen Torsionsschwinger 11, der mit Hilfe von vier Ultraschallkonvertern 21 zu Torsionsschwingungen anregbar ist, und zwar in einer Weise, wie sie an sich beispielsweise aus der DE 10 2009 027 021 bekannt ist. In den Ultraschallkonvertern 21, die beispielsweise Stapel piezoelektrischer Scheiben enthalten können, werden elektrische Schwingungen in mechanische Ultraschallschwingungen konvertiert. Vier Übertragungsstücke 26 sind an jeweils einem ihrer Enden 28 mit jeweils einem der Ultraschallkonverter 21 verbunden und hierdurch zu longitudinalen Schwingungen entlang einer Schwingungsachse S anregbar. Jeweils zwei Ultraschallkonverter 21 und ein dazwischen angeordnetes Übertragungsstück 26 bilden einen Schwingungserzeuger 36. An Ankopplungspunkten 27 sind die jeweils anderen Enden der Übertragungsstücke 26 tangential am Torsionsschwinger 11 angekoppelt. Die Übertragungsstücke 26 und der Torsionsschwinger 11 sind miteinander einstückig ausgebildet. Hierdurch ist dieser zu Torsionsschwingungen um eine Torsionsachse T anregbar. Das Ultraschallschweisssystem 10 enthält ferner eine mit dem Torsionsschwinger 11 schwingungsgekoppelte Schweissfläche 12, welche an einer Stirnseite des Torsionsschwingers 11 angeordnet ist. Ausserdem umfasst das Ultraschallschweisssystem 10 unter anderem einen in Figur 1 nicht dargestellten Amboss.

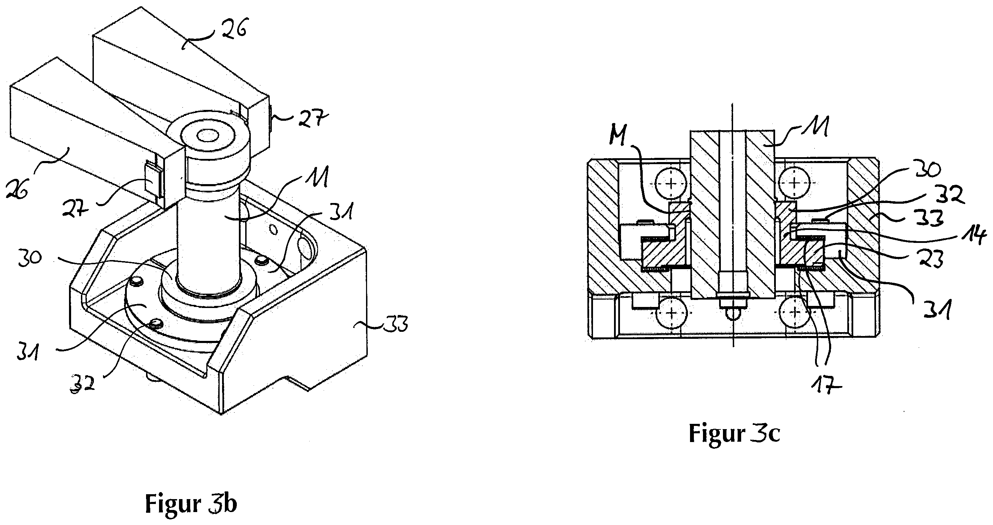

Ein Befestigungsring 13 umgreift und hält den Torsionsschwinger 11 im Bereich eines Amplitudenmaximums M. Der Befestigungsring 13 ist bezüglich der Torsionsachse T zwischen den Ankopplungspunkten 27 und der Schweissfläche 12 angeordnet. Er weist einen flanschförmigen Abschnitt 23 und einen sich vom flanschförmigen Abschnitt 23 in Richtung der Torsionsachse T erstreckenden hülsenförmigen Abschnitt 14 auf, in dem um den Umfang gleichmässig verteilt Langlöcher 15 gebildet sind, die den hülsenförmigen Abschnitt 14 in radialer Richtung durchdringen und deren Längsachsen sich in Richtung der Torsionsachse T erstrecken. Durch die zwischen den Langlöchern 15 gebildeten Stege 22 können effektiv Torsionskräfte und torsionale Auslenkungen aufgenommen werden, was für eine verbesserte Schallentkopplung sorgt. Zudem kann das Risiko von Rissen oder sogar Brüchen im Bereich der Anbindung zwischen dem Torsionsschwinger 11 und den Ultraschallkonvertern 21 reduziert werden. Des Weiteren verfügt der Befestigungsring 13 über einen Haltering 30, der sich von dem vom flanschförmigen Abschnitt 23 abgewandten axialen Ende des hülsenförmigen Abschnitts 14 in radialer Richtung nach innen erstreckt. Ein radial inneres Ende des Halterings ist auf den Torsionsschwinger 11 aufgeschrumpft und hält ihn auf diese Weise (siehe dazu auch Figur 3c, die eine Schnittansicht eines ähnlichen erfindungsgemässen Ultraschallbearbeitungssystem zeigt).

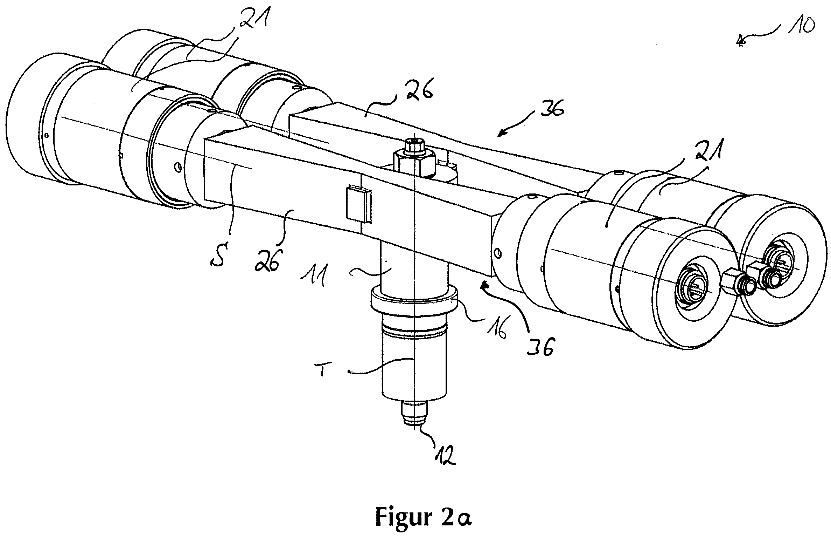

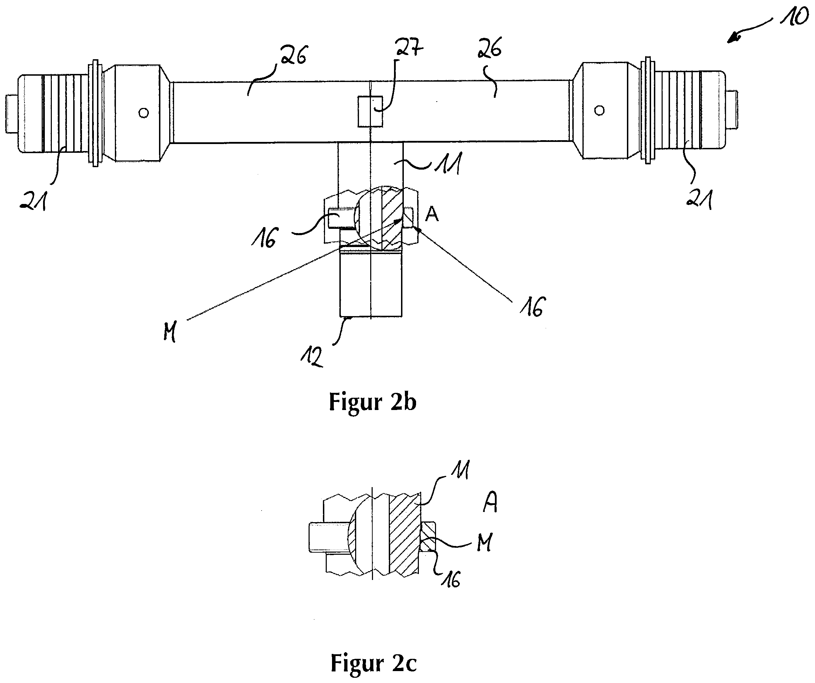

Das in den Figuren 2a bis 2c dargestellte zweite erfindungsgemässe Ultraschallschweisssystem 10 enthält anstelle eines Befestigungsringes einen Abstimmring 16. Der Abstimmring 16 umgreift den Torsionsschwinger 11 und ist derart mit diesem verbunden und auf ihn abgestimmt, dass der Torsionsschwinger 11 mit dem damit verbundenen Abstimmring 16 eine Arbeitsfrequenz in einem vorgegebenen Frequenzbereich aufweist. Hierdurch ist es möglich, den Torsionsschwinger 11 vergleichsweise kurz auszubilden, wodurch störende Resonanzen unterdrückt werden können. Die ohne weitere Massnahmen entstehende Verschiebung der Arbeitsfrequenz kann durch geeignete Wahl des Abstimmrings 16 zumindest teilweise oder sogar vollständig kompensiert werden. Zu diesem Zweck kann beispielsweise der Aussendurchmesser und/oder die axiale Höhe des Abstimmrings 16 entsprechend gewählt werden.

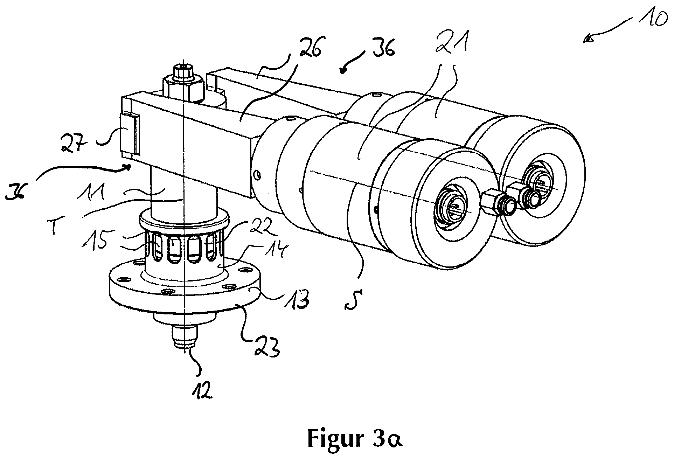

Die Figuren 3a bis 3c zeigen ein weiteres erfindungsgemässes Ultraschallschweisssystem 10, welches ebenfalls einen Befestigungsring 13, aber nur zwei anstatt vier Ultraschallkonverter 21 enthält. Hier bilden also jeweils nur ein einziger Ultraschallkonverter 21 und ein damit verbundenes Übertragungsstück 26 einen Schwingungserzeuger 36. Diese regen den Torsionsschwinger 11 in der prinzipiell in der WO 2011/138404 dargestellten Weise zu Torsionsschwingungen um eine Torsionsachse T an. Der Befestigungsring 13 umgreift und hält den Torsionsschwinger 11 im Bereich eines Amplitudenmaximums M (siehe dazu im Detail auch Figur 3c).

Die Figuren 3b und 3c lassen erkennen, wie die in Figur 3a dargestellten Komponenten der dritten erfindungsgemässen Ausführungsform montiert sind. Der flanschförmige Abschnitt 23 des Befestigungsrings 13, von dem hier nur der Haltering 30 erkennbar ist, wird mit Hilfe von zwei Befestigungsplatten 31 und mehreren Befestigungsschrauben 32 an einem statischen Teil 33 der Ultraschallschweissvorrichtung 10 befestigt. Zwischen einer Unterseite des flanschförmigen Abschnitts 23 und dem statischen Teil 33 sowie zwischen einer Oberseite des flanschförmigen Abschnitts 23 und der Befestigungsplatte 31 befindet sich jeweils eine Lage 17 aus einem elastischen, dämpfenden Material, beispielsweise aus Gummi. Die Lagen 17 bilden erste Bedämpfungsmittel zum passiven Bedämpfen des Torsionsschwingers 11 und können Rissbildungen im Bereich der Anbindung zwischen dem Torsionsschwinger 11 und den Ultraschallkonvertern 21 verhindern.

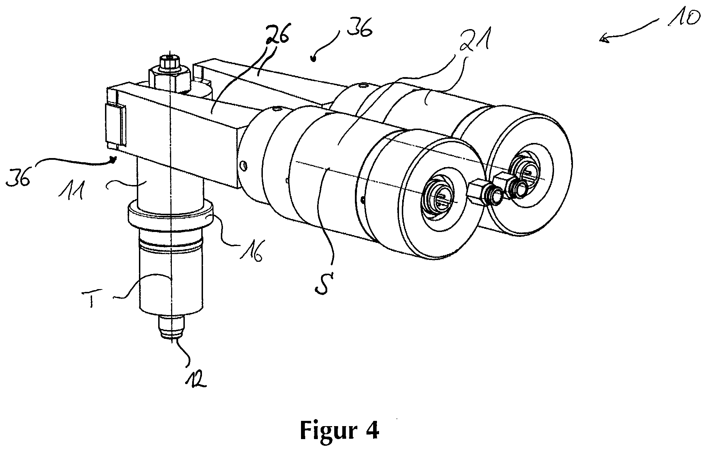

In Figur 4 ist ein weiteres erfindungsgemässes Ultraschallschweisssystem 10 mit zwei Ultraschallkonvertern 21 und einem Abstimmring 16 wiedergegeben.

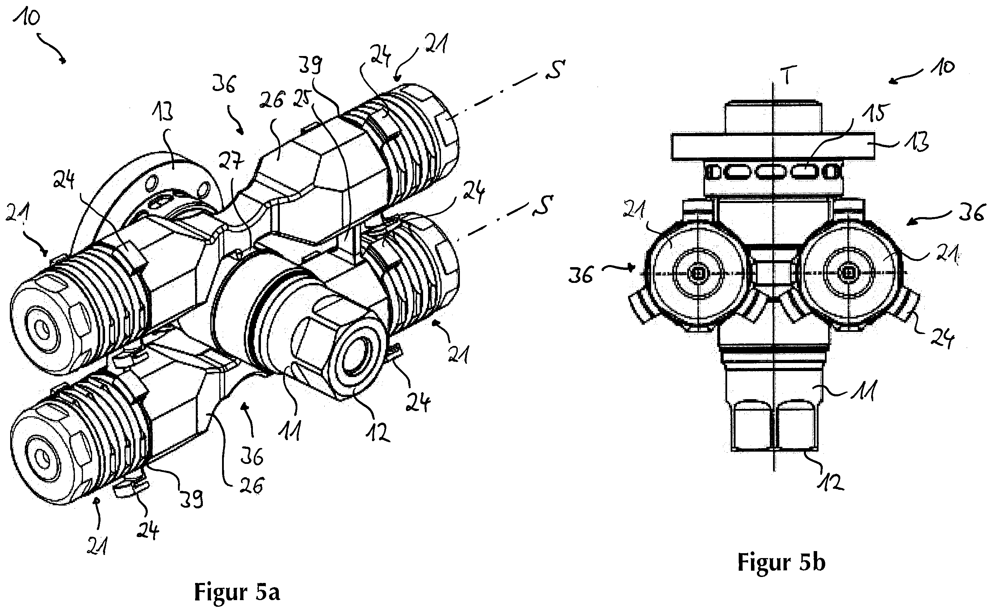

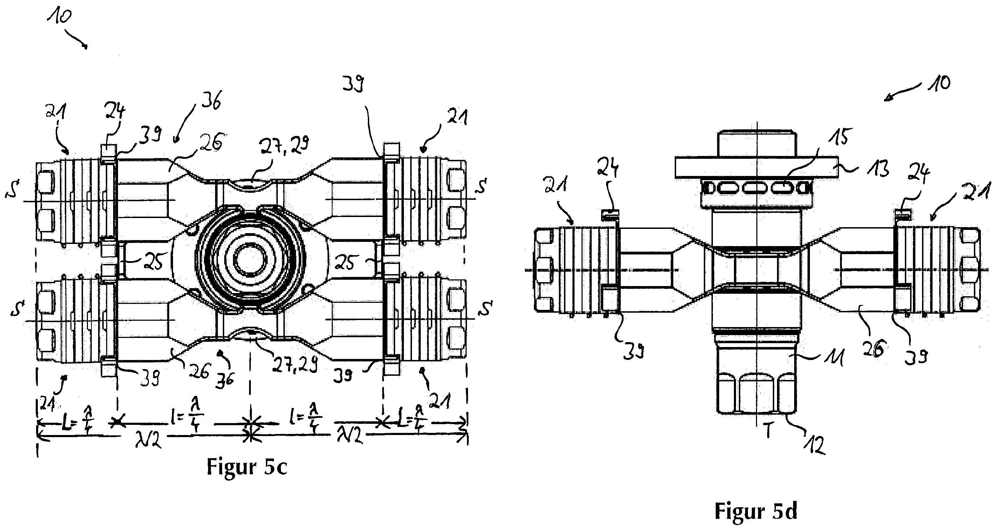

Das in den Figuren 5a bis 5d teilweise dargestellte Ultraschallschweisssystem 10 enthält einen Torsionsschwinger 11 mit einer Schweissfläche 12, einen Befestigungsring 13 und zwei Schwingungserzeuger 36. Jeder der Schwingungserzeuger 36 enthält zwei Ultraschallkonverter 21 und ein zwischen den Ultraschallkonvertern 21 angeordnetes Übertragungsstück 26, die an Verbindungsstellen 39 insbesondere einstückig verbunden sind. An zwei gegenüberliegenden Ankopplungspunkten 27 sind die Übertragungsstücke 26 an ihren Mittelpunkten 38 am Torsionsschwinger 11 angekoppelt.

Im Gegensatz zu den Ausführungsbeispielen gemäss Figuren 1 und 3a bis 3c ist hier der Befestigungsring 13 bezüglich der Ankopplungspunkte 27 gegenüber von der Schweissfläche 12 angeordnet. Dies ermöglicht eine symmetrischere Anordnung und einen kürzeren Abstand der Schweissfläche 12 von den Ankopplungspunkten 27. Ebenfalls im Gegensatz zu den Ausführungsbeispielen gemäss Figuren 1 und 3a bis 3c enthält der Befestigungsring 13 hier Langlöcher 15, deren Längsachsen sich bezüglich der Torsionsachse T in Umfangsrichtung erstrecken.

Die Übertragungsstücke 26 weisen entlang ihrer Schwingungsachsen S von den Verbindungsstellen 39 bis zum Ankopplungspunkt 27 eine Länge 1 auf, die gleich einer viertel Wellenlänge λ/4 der longitudinalen Schwingungen bei bestimmungsgemässem Betrieb des Ultraschallbearbeitungssystems 10 ist. Auch die Ultraschallkonverter 21 weisen entlang der Schwingungsachsen S eine Länge L auf, die die gleich einer viertel Wellenlänge λ/4 der longitudinalen Schwingungen bei bestimmungsgemässem Betrieb des Ultraschallbearbeitungssystems 10 ist. Insgesamt haben die Schwingungserzeuger 36 entlang der Schwingungsachsen S eine Länge, die gleich einer ganzen Wellenlänge λ der longitudinalen Schwingungen bei bestimmungsgemässem Betrieb des Ultraschallbearbeitungssystems 10 ist.

An den Verbindungsstellen 39 sind jeweils drei in Umfangsrichtung gleichmässig verteilte Halteklammern 24 angeordnet, an denen die Schwingungserzeuger 36 an einem statischen Teil des Ultraschallschweisssystems 10 gehalten sind. Die Verbindungsstellen 39 sind in Schwingungsknoten angeordnet.

Durch die kürzere Ausbildung der Schwingungserzeuger 36 entlang der Schwingungsachsen S können störende Biegeschwingungen weitgehend unterdrückt werden. Auf diese Weise können Rissbildungen im Bereich der Anbindung zwischen dem Torsionsschwinger 11 und den Schwingungserzeugern 36 verhindert werden. Überdies werden die Baugrösse und die Masse des Ultraschallschweisssystems 10 reduziert. Dennoch genügen derart kurze Schwingungserzeuger 36, um den Torsionsschwinger 11 effizient zu Torsionsschwingungen anzuregen.

Wie vor allem in Figur 5c zu erkennen ist, sind die beiden Übertragungsstücke 36 über zwei Zwischenstege 25 miteinander verbunden. Dabei ist jeder Zwischensteg 25 an seinen beiden Enden mit jeweils einer Verbindungsstelle 39 der Schwingungserzeuger 36 verbunden. Dies sorgt für eine statische und auch dynamische Verstärkung der schwingenden Komponenten.

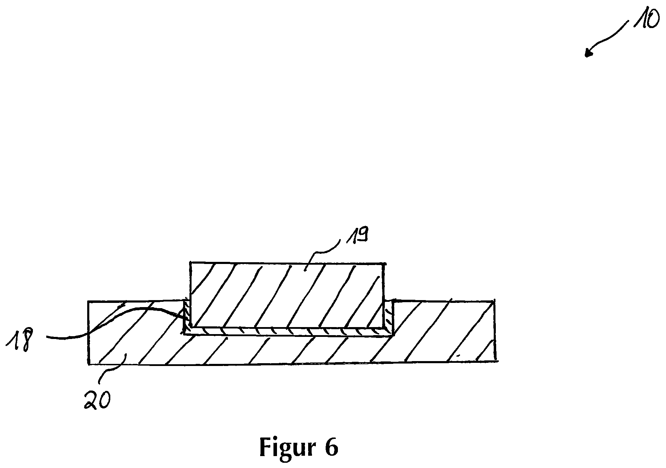

In Figur 6 zeigt schematisch einen Teil eines weiteren erfindungsgemässen Ultraschallschweisssystems 10. Dargestellt sind ein Amboss 19 und eine Ambosshalterung 20. Zwischen dem Amboss 19 und der Ambosshalterung 20 ist eine Lage 18 aus einem elastischen, dämpfenden Material gebildet, beispielsweise aus Gummi. Die Lage 18 stellt somit zweite Bedämpfungsmittel 18 dar, über die der Amboss 19 an der Ambosshalterung 20 gelagert ist.

## Patentansprüche

1. Torsionales Ultraschallbearbeitungssystem (10), insbesondere Ultraschallschweisssystem (10), enthaltend
- mindestens einen Torsionsschwinger (11),
- mindestens eine mit dem Torsionsschwinger (11) schwingungsgekoppelte Bearbeitungsfläche (12),
- mindestens zwei Schwingungserzeuger (36) mit jeweils mindestens einem Ultraschallkonverter (21) und mindestens einem an einer Verbindungsstelle (39) damit insbesondere einstückig verbundenen Übertragungsstück (26), das mittels mindestens eines der Ultraschallkonverter (21) zu longitudinalen Schwingungen entlang einer Schwingungsachse (S) anregbar und an einem Ankopplungspunkt (27) tangential am Torsionsschwinger (11) angekoppelt ist, um diesen zu Torsionsschwingungen um eine Torsionsachse (T) anzuregen,
**dadurch gekennzeichnet, dass**
die mindestens zwei Schwingungserzeuger (36) über einen mit jeweils der Verbindungsstelle (3) der Schwingungserzeuger (36) verbundenen Zwischensteg (25) miteinander verbunden sind und dass die Verbindungsstelle (3) an einem Schwingungsknoten angeordnet ist, wobei die Übertragungsstücke (26) mindestens zweier über einen Zwischensteg (25) miteinander verbundener Schwingungserzeuger (36) zueinander parallele Schwingungsachsen (S) aufweisen.

2. Ultraschallbearbeitungssystem (10) gemäss Anspruch 1, wobei der Zwischensteg (25) an seinen beiden Enden mit jeweils einer Verbindungsstelle (39) des Schwingungserzeugers (36) mit diesem verbunden ist.

3. Ultraschallbearbeitungssystem (10) gemäss einem der vorangehenden Ansprüche,
wobei mindestens eines der Übertragungsstücke (26) entlang seiner Schwingungsachse (S) von der Verbindungsstelle (39) bis zum Ankopplungspunkt (27) eine Länge (l) aufweist, die zumindest näherungsweise gleich einer viertel Wellenlänge (λ/4) der longitudinalen Schwingungen bei bestimmungsgemässem Betrieb des Ultraschallbearbeitungssystems (10) ist.

4. Ultraschallbearbeitungssystem (10) gemäss Anspruch 3, wobei das mindestens eine der Übertragungsstücke (26) an jedem Ende (28) mit jeweils einem Ultraschallkonverter (21) insbesondere einstückig verbunden ist und der Ankopplungspunkt (27) in einem Mittelpunkt (29) des Übertragungsstücks (26) angeordnet ist.

5. Ultraschallbearbeitungssystem (10) gemäss einem der vorangehenden Ansprüche,
weiterhin enthaltend mindestens einen den Torsionsschwinger (11) wenigstens teilweise umgreifenden und haltenden Befestigungsring (13),
wobei der Befestigungsring (13) den Torsionsschwinger (11) im Bereich eines Amplitudenmaximums (M) der Torsionsschwingungen hält.

6. Ultraschallbearbeitungssystem (10) gemäss Anspruch 5, wobei der Torsionsschwinger (11) um eine Torsionsachse (T) zu Torsionsschwingungen anregbar ist und der Befestigungsring (13) einen flanschförmigen Abschnitt (23) und einen sich vom flanschförmigen Abschnitt (23) in Richtung der Torsionsachse (T) erstreckenden hülsenförmigen Abschnitt (14) aufweist, in dem mindestens eine Entkopplungsöffnung (15) gebildet ist, die den hülsenförmigen Abschnitt (14) in radialer Richtung durchdringt.

7. Ultraschallbearbeitungssystem (10) gemäss einem der vorangehenden Ansprüche,
wobei das Ultraschallbearbeitungssystem (10) mindestens einen den Torsionsschwinger (11) wenigstens teilweise umgreifenden Abstimmring (16) aufweist, welcher derart mit dem Torsionsschwinger (11) verbunden und auf diesen abgestimmt ist, dass der Torsionsschwinger (11) mit dem damit verbundenen Abstimmring (16) eine Arbeitsfrequenz in einem vorgegebenen Frequenzbereich aufweist.

8. Ultraschallbearbeitungssystem (10) gemäss Anspruch 7,
wobei der Abstimmring (16) im Bereich eines Amplitudenmaximums (M) der Torsionsschwingungen mit dem Torsionsschwinger (11) verbunden ist.

9. Ultraschallbearbeitungssystem (10) gemäss einem der vorangehenden Ansprüche,
weiterhin enthaltend erste Bedämpfungsmittel (17) zum insbesondere passiven Bedämpfen des Torsionsschwingers (11), bevorzugt zum insbesondere passiven Bedämpfen von Schwingungen des Torsionsschwingers (11) im Frequenzbereich von 10 Hz bis 10 kHz.

10. Ultraschallbearbeitungssystem (10) gemäss Anspruch 9,
wobei das Ultraschallbearbeitungssystem (10) mindestens einen den Torsionsschwinger (11) wenigstens teilweise umgreifenden und haltenden Befestigungsring (13) enthält,
wobei der Befestigungsring (13) den Torsionsschwinger (11) im Bereich eines Amplitudenmaximums (M) der Torsionsschwingungen hält, und
wobei der Befestigungsring (13) über die ersten Bedämpfungsmittel (17) an einem statischen Teil des Ultraschallverbindungssystems (10) gelagert ist.

11. Ultraschallbearbeitungssystem (10) gemäss Anspruch 10, wobei die ersten Bedämpfungsmittel (17) mindestens eine Lage aus einem elastischen, dämpfenden Material enthalten, beispielsweise aus Gummi.

12. Ultraschallbearbeitungssystem (10) gemäss einem der vorangehenden Ansprüche,
welches als Ultraschallschweisssystem (10) ausgebildet ist und weiterhin einen Amboss (19) und zweite Bedämpfungsmittel (18) zum insbesondere passiven Bedämpfen des Ambosses (19) enthält, bevorzugt zum insbesondere passiven Bedämpfen von Schwingungen im Frequenzbereich von 10 Hz bis 10 kHz.

13. Ultraschallbearbeitungssystem (10) gemäss Anspruch 12, wobei die zweiten Bedämpfungsmittel (18) mindestens eine Lage aus einem elastischen, dämpfenden Material enthalten, beispielsweise aus Gummi.

14. Verfahren zum Abstimmen eines um eine Torsionsachse (T) zu Torsionsschwingungen anregbaren Torsionsschwingers (11) eines Ultraschallbearbeitungssystems (10) gemäss einem der vorangehenden Ansprüche,
wobei mindestens ein Abstimmring (16) derart gewählt und mit dem Torsionsschwinger (11) verbunden wird, dass er diesen wenigstens teilweise umgreift und der Torsionsschwinger (11) mit dem damit verbundenen Abstimmring (16) eine Arbeitsfrequenz in einem vorgegebenen Frequenzbereich aufweist.

## Claims

1. Torsional ultrasonic processing system (10), in particular ultrasonic welding system (10), comprising
- at least one torsional oscillator (11),
- at least one working surface (12) coupled to the torsional oscillator (11) in an oscillating manner,
- at least two vibration generators (36), each having at least one ultrasonic converter (21) and at least one transmission piece (26) which is connected thereto, in particular integrally, at a connection point (39), which transmission piece can be excited to longitudinal vibrations along a vibration axis (S) by means of at least one of the ultrasonic converters (21) and is coupled tangentially to the torsional oscillator (11) at a coupling point (27) in order to excite the latter to torsional vibrations about a torsional axis (T),
**characterized in that**
the at least two vibration generators (36) are connected to one another via an intermediate bar (25) connected in each case to the connection point (3) of the vibration generators (36), and **in that** the connection point (3) is arranged at a vibration node, with the transmission pieces (26) of at least two vibration generators (36) connected to one another via an intermediate bar (25) having vibration axes (S) which are parallel to one another.

2. Ultrasonic processing system (10) according to claim 1, wherein the intermediate bar (25) is connected at its two ends to a respective connection point (39) of the vibration generator (36).

3. Ultrasonic processing system (10) according to one of the preceding claims,
wherein at least one of the transmission pieces (26) has a length (l) along its oscillation axis (S) from the connection point (39) to the coupling point (27) which is at least approximately equal to a quarter wavelength (λ/4) of the longitudinal oscillations during intended operation of the ultrasonic processing system (10).

4. Ultrasonic processing system (10) according to claim 3, wherein the at least one of the transmission pieces (26) is connected at each end (28) to a respective ultrasonic converter (21), in particular in one piece, and the coupling point (27) is arranged in a center (29) of the transmission piece (26).

5. Ultrasonic machining system (10) according to one of the preceding claims,
further comprising at least one fastening ring (13) at least partially surrounding and holding the torsional transducer (11),
wherein the fastening ring (13) holds the torsional transducer (11) in the region of a maximum amplitude (M) of the torsional vibrations.

6. Ultrasonic machining system (10) according to claim 5, wherein the torsional oscillator (11) can be excited to torsional oscillations about a torsional axis (T) and the fastening ring (13) has a flange-shaped section (23) and a sleeve-shaped section (14) extending from the flange-shaped section (23) in the direction of the torsional axis (T), in which at least one decoupling opening (15) is formed, which penetrates the sleeve-shaped section (14) in the radial direction.

7. Ultrasonic machining system (10) according to one of the preceding claims,
wherein the ultrasonic processing system (10) comprises at least one tuning ring (16) which at least partially surrounds the torsional transducer (11) and which is connected to the torsional transducer (11) and tuned thereto in such a way that the torsional transducer (11) with the tuning ring (16) connected thereto has an operating frequency in a predetermined frequency range.

8. Ultrasonic machining system (10) according to claim 7, wherein the tuning ring (16) is connected to the torsional transducer (11) in the region of a maximum amplitude (M) of the torsional vibrations.

9. Ultrasonic machining system (10) according to one of the preceding claims,
further comprising first damping means (17) for in particular passively damping the torsional vibrator (11), preferably for in particular passively damping vibrations of the torsional vibrator (11) in the frequency range from 10 Hz to 10 kHz.

10. Ultrasonic machining system (10) according to claim 9,
wherein the ultrasonic machining system (10) comprises at least one fixing ring (13) at least partially surrounding and holding the torsional oscillator (11),
wherein the fastening ring (13) holds the torsional oscillator (11) in the region of a maximum amplitude (M) of the torsional oscillations, and
the fastening ring (13) being mounted on a static part of the ultrasonic connection system (10) via the first damping means (17).

11. Ultrasonic processing system (10) according to claim 10, wherein the first damping means (17) comprise at least one layer of an elastic, damping material, for example rubber.

12. Ultrasonic processing system (10) according to one of the preceding claims,
which is designed as an ultrasonic welding system (10) and further comprises an anvil (19) and second damping means (18) for in particular passively damping the anvil (19), preferably for in particular passively damping vibrations in the frequency range from 10 Hz to 10 kHz.

13. Ultrasonic processing system (10) according to claim 12, wherein the second damping means (18) comprise at least one layer of an elastic, damping material, for example rubber.

14. Method for tuning a torsional oscillator (11) of an ultrasonic processing system (10), which can be excited to torsional oscillations about a torsional axis (T), according to one of the preceding claims,
wherein at least one tuning ring (16) is selected and connected to the torsional transducer (11) in such a way that it at least partially embraces the latter and the torsional transducer (11) with the tuning ring (16) connected thereto has an operating frequency in a predetermined frequency range.

## Revendications

1. Système d'usinage par ultrasons torsionnel (10), en particulier système de soudage par ultrasons (10), comprenant
- au moins un oscillateur de torsion (11),
- au moins une surface d'usinage (12) couplée en vibration avec le vibrateur de torsion (11),
- au moins deux générateurs d'oscillations (36) comprenant chacun au moins un convertisseur d'ultrasons (21) et au moins une pièce de transmission (26) reliée à celui-ci, en particulier de manière intégrale, en un point de liaison (39), la pièce de transmission (26) pouvant être excitée en vibrations longitudinales le long d'un axe de vibration (S) au moyen d'au moins l'un des convertisseurs d'ultrasons (21) et étant couplée tangentiellement à l'oscillateur de torsion (11) en un point de couplage (27), afin d'exciter celui-ci en vibrations de torsion autour d'un axe de torsion (T),
**caractérisé en ce que**
les au moins deux générateurs d'oscillations (36) sont reliés entre eux par une entretoise intermédiaire (25) reliée respectivement au point de liaison (3) des générateurs d'oscillations (36) et **en ce que** le point de liaison (3) est disposé sur un noeud d'oscillation, les pièces de transmission (26) d'au moins deux générateurs d'oscillations (36) reliés entre eux par une entretoise intermédiaire (25) présentant des axes d'oscillation (S) parallèles entre eux.

2. Système d'usinage par ultrasons (10) selon la revendication 1,
dans lequel l' entretoise intermédiaire (25) est reliée à ses deux extrémités à un point de liaison (39) respectif du générateur d'oscillations (36) avec celui-ci.

3. Système d'usinage par ultrasons (10) selon l'une des revendications précédentes,
dans lequel au moins l'une des pièces de transmission (26) présente, le long de son axe d'oscillation (S), depuis le point de liaison (39) jusqu'au point de couplage (27), une longueur (l) qui est au moins approximativement égale à un quart de la longueur d'onde (A/4) des oscillations longitudinales lors du fonctionnement du système d'usinage par ultrasons (10) conformément à sa destination.

4. Système d'usinage par ultrasons (10) selon la revendication 3,
dans lequel l'une au moins des pièces de transmission (26) est reliée à chaque extrémité (28) à un convertisseur d'ultrasons (21) respectif, en particulier de manière intégrale, et le point de couplage (27) est disposé en un point central (29) de la pièce de transmission (26).

5. Système d'usinage par ultrasons (10) selon l'une des revendications précédentes,
contenant en outre au moins une bague de fixation (13) entourant et maintenant au moins partiellement l'oscillateur de torsion (11),
la bague de fixation (13) maintenant l'oscillateur de torsion (11) dans la zone d'un maximum d'amplitude (M) des oscillations de torsion.

6. Système d'usinage par ultrasons (10) selon la revendication 5,
dans lequel l'oscillateur de torsion (11) peut être excité en oscillations de torsion autour d'un axe de torsion (T) et la bague de fixation (13) présente une section en forme de bride (23) et une section en forme de douille (14) s'étendant depuis la section en forme de bride (23) dans la direction de l'axe de torsion (T), dans laquelle est formée au moins une ouverture de découplage (15) qui traverse la section en forme de douille (14) dans la direction radiale.

7. Système d'usinage par ultrasons (10) selon l'une des revendications précédentes,
le système de traitement par ultrasons (10) présentant au moins une bague d'accord (16) entourant au moins partiellement l'oscillateur de torsion (11), laquelle est reliée à l'oscillateur de torsion (11) et accordée sur celui-ci de telle sorte que l'oscillateur de torsion (11) avec la bague d'accord (16) reliée à celui-ci présente une fréquence de travail dans une plage de fréquences prédéfinie.

8. Système d'usinage par ultrasons (10) selon la revendication 7,
dans lequel la bague d'accord (16) est relié à l'oscillateur de torsion (11) dans la zone d'un maximum d'amplitude (M) des oscillations de torsion.

9. Système d'usinage par ultrasons (10) selon l'une des revendications précédentes,
contenant en outre des premiers moyens d'amortissement (17) pour amortir en particulier passivement l'oscillateur de torsion (11), de préférence pour amortir en particulier passivement des oscillations de l'oscillateur de torsion (11) dans la plage de fréquences de 10 Hz à 10 kHz.

10. Système d'usinage par ultrasons (10) selon la revendication 9,
le système d'usinage par ultrasons (10) comprenant au moins une bague de fixation (13) entourant et maintenant au moins partiellement l'oscillateur de torsion (11),
la bague de fixation (13) maintenant l'oscillateur de torsion (11) dans la zone d'un maximum d'amplitude (M) des oscillations de torsion, et
dans lequel la bague de fixation (13) est supportée par une partie statique du système de connexion ultrasonique (10) par l'intermédiaire des premiers moyens d'amortissement (17).

11. Système d'usinage par ultrasons (10) selon la revendication 10,
dans lequel les premiers moyens d'amortissement (17) comprennent au moins une couche d'un matériau élastique amortissant, par exemple en caoutchouc.

12. Système d'usinage par ultrasons (10) selon l'une des revendications précédentes,
qui est conçu comme un système de soudage par ultrasons (10) et qui contient en outre une enclume (19) et des deuxièmes moyens d'amortissement (18) pour amortir en particulier de manière passive l'enclume (19), de préférence pour amortir en particulier de manière passive des vibrations dans la plage de fréquences de 10 Hz à 10 kHz.

13. Système d'usinage par ultrasons (10) selon la revendication 12,
dans lequel les deuxièmes moyens d'amortissement (18) comprennent au moins une couche d'un matériau élastique amortissant, par exemple en caoutchouc.

14. Procédé pour accorder un oscillateur de torsion (11) d'un système d'usinage par ultrasons (10) pouvant être excité en oscillations de torsion autour d'un axe de torsion (T) selon l'une des revendications précédentes,
dans lequel au moins une bague d'accord (16) est choisie et reliée à l'oscillateur de torsion (11) de telle sorte qu'elle entoure au moins partiellement celui-ci et que l'oscillateur de torsion (11) avec la bague d'accord (16) reliée à celui-ci présente une fréquence de travail dans une plage de fréquences prédéfinie.
